# EUROPÄISCHE PATENTANMELDUNG

(11) **EP 1 782 973 A2**
(43) Veröffentlichungstag der Anmeldung: **09.05.2007**
(21) Anmeldenummer: 06022679.2
(22) Anmeldetag: 31.10.2006
(51) Int. Cl.: B60D 1/26, B60D 1/54

(54) **Betätigungseinrichtung**

(30) Priorität: 03.11.2005 DE 102005053177
(71) Anmelder: SCAMBIA INDUSTRIAL DEVELOPMENTS AKTIENGESELLSCHAFT, 9494 Schaan (LI)
(72) Erfinder: Rimmelspacher, Bernhard, 76287 Rheinstetten (DE); Möhring, Siegfried, 71696 Möglingen (DE); Fischer, Michael, 71679 Asperg (DE); Riehle, Jörg, 71679 Asperg (DE)
(74) Vertreter: Hoeger, Stellrecht & Partner Patentanwälte

(57) **Zusammenfassung**

Um eine Betätigungseinrichtung für eine Anhängekupplung, insbesondere zum Betätigen einer Anhängekupplung mit einem zwischen einer Arbeitsstellung und einer Ruhestellung bewegbaren Kugelhals, beispielsweise einer Verriegelungsvorrichtung einer derartigen Anhängekupplung, umfassend eine Vorrichtungsbasis, welche fahrzeugseitig montierbar ist und einen an der Vorrichtungsbasis bewegbar gelagerten Hebel, der von einer Ausgangsstellung, in welcher keine Betätigung der Anhängekupplung erfolgt, in eine Betätigungsstellung bewegbar ist, wodurch mittels einer Bewegungsübertragungsvorrichtung eine Einwirkung auf die Anhängekupplung erfolgt, derart zu verbessern, dass diese möglichst günstig bedienbar ist, wird vorgeschlagen, dass an dem Hebel eine Sicherungseinrichtung vorgesehen ist, welche in der Ausgangsstellung den Hebel gegen eine Betätigung sichert.

## Beschreibung

Die Erfindung betrifft eine Betätigungseinrichtung für eine Anhängekupplung, insbesondere zum Betätigen einer Anhängekupplung mit einem zwischen einer Arbeitsstellung und einer Ruhestellung bewegbaren Kugelhals, beispielsweise einer Verriegelungsvorrichtung einer derartigen Anhängekupplung, umfassend eine Vorrichtungsbasis, welche fahrzeugseitig montierbar ist und einen an der Vorrichtungsbasis bewegbar gelagerten Hebel, der von einer Ausgangsstellung, in welcher keine Betätigung der Anhängekupplung erfolgt, in eine Betätigungsstellung bewegbar ist, wodurch mittels einer Bewegungsübertragungsvorrichtung eine Einwirkung auf die Anhängekupplung erfolgt.

Derartige Betätigungseinrichtungen sind aus dem Stand der Technik bekannt. Bei diesen besteht das Problem, dass diese einerseits nicht ausreichend sicher und andererseits ergonomisch nicht günstig betätigbar sind.

Der Erfindung liegt daher die Aufgabe zugrunde, eine Betätigungseinrichtung der gattungsgemäßen Art derart zu verbessern, dass diese möglichst günstig bedienbar ist.

Diese Aufgabe wird bei einer Betätigungseinrichtung der gattungsgemäßen Art erfindungsgemäß dadurch gelöst, dass an dem Hebel eine Sicherungseinrichtung vorgesehen ist, welche in der Ausgangsstellung den Hebel gegen eine Betätigung sichert.

Der Vorteil der erfindungsgemäßen Lösung ist darin zu sehen, dass damit ein unbeabsichtigtes Betätigen des Hebels und somit der Betätigungseinrichtung ausgeschlossen werden kann.

Damit besteht auch beispielsweise die Möglichkeit, den Hebel nicht in einem geschützten Bereich der Karosserie anzuordnen, sondern in jedem für eine Bedienung geeigneten Bereich.

Grundsätzlich könnte die Sicherungseinrichtung in unterschiedlichster Art und Weise ausgebildet sein.

Beispielsweise wäre es denkbar, die Sicherungseinrichtung so auszubilden, dass sie den Hebel abdeckt um ein unbeabsichtigtes Betätigen zu verhindern.

Eine andere Lösung sieht vor, dass die Sicherungseinrichtung den Hebel beispielsweise gegenüber der Stoßfängereinheit festlegt.

Eine besonders robuste Sicherung des Hebels in der Ausgangsstellung ist dadurch möglich, dass die Sicherungseinrichtung ein Sicherungselement umfasst, welches mit einer Sicherungselementaufnahme an der Vorrichtungsbasis in Wirkverbindung bringbar ist, um den Hebel in der Ausgangsstellung an der Vorrichtungsbasis festzulegen.

Ein derartiges Sicherungselement und eine entsprechende Sicherungselementaufnahme können in unterschiedlichster Art und Weise ausgebildet sein.

Um sicherzustellen, dass die beiden stets in ihre miteinander zusammenwirkende Stellung übergehen, ist vorzugsweise vorgesehen, dass das Sicherungselement durch einen elastischen Kraftspeicher in Richtung seiner mit der Sicherungselementaufnahme zusammenwirkenden Stellung beaufschlagt ist.

Um ein möglichst ergonomisches Lösen der Sicherungseinrichtung zu erreichen, ist vorzugsweise vorgesehen, dass das Sicherungselement im Zusammenhang mit einem Einwirken auf den Hebel außer Wirkverbindung mit der Sicherungselementaufnahme bringbar ist.

Ein derartiges Lösen der Wirkverbindung ist nun in unterschiedlichster Art und Weise denkbar.

Ein vorteilhaftes Ausführungsbeispiel sieht vor, dass die Sicherungseinrichtung ein Löseelement umfasst, mit welchem das Sicherungselement in eine außer Wirkverbindung mit der Sicherungselementaufnahme stehende Stellung bringbar ist.

Ergonomisch besonders günstig lässt sich eine derartige Sicherungseinrichtung dann betätigen, wenn das Löseelement gegenüber dem Hebel bewegbar ist.

Im einfachsten Fall ist dabei vorgesehen, dass das Löseelement an dem Hebel bewegbar gelagert ist.

Das Löseelement könnte beispielsweise ein Löseknopf sein, welcher bei Einwirken auf den Hebel mitbetätigbar ist.

Eine besonders günstige Lösung sieht vor, dass das Löseelement ein Lösehebel ist, welcher beispielsweise schwenkbar an dem Hebel gelagert ist.

Besonders zweckmäßig ist es dabei, wenn der Lösehebel zum Betätigen in Richtung des Hebels schwenkbar ist, so dass durch ein Aufeinanderzubewegen von Lösehebel und Hebel die Sicherungseinrichtung lösbar ist.

Eine andere vorteilhafte Lösung sieht vor, dass das Sicherungselement durch Einwirken auf den Hebel in einer quer zur von der Ausgangsstellung in die Betätigungsstellung führenden Bewegungsrichtung verlaufenden Löserichtung außer Wirkverbindung mit der Sicherungselementaufnahme bringbar ist.

Bei diesem Ausführungsbeispiel ist somit kein zusätzlicher Lösehebel erforderlich, sondern eine zusätzliche Bewegung des Hebels selbst und zwar in einer Richtung, die quer zu der für das Erreichen der Betätigungsstellung erforderlichen Bewegungsrichtung verläuft.

Eine derartige komplexe Bewegung des Hebels ist einerseits ergonomisch besonders günstig und lässt andererseits noch die Wirksamkeit der Sicherungseinrichtung in der Ausgangsstellung des Hebels zu.

Hinsichtlich der Anordnung des Hebels wurden bislang keine näheren Angaben gemacht. So wäre es beispielsweise denkbar, den Hebel nach wie vor so anzuordnen, dass er beispielsweise in einem Inneren des Kofferraums zugänglich angeordnet ist.

Es wäre auch beispielsweise denkbar, den Hebel so anzuordnen, dass er beispielsweise nach Öffnen einer Zugangsklappe zu der Karosserie, dies könnte eine Tür, eine Heckklappe oder eine Tankklappe sein, zugänglich ist.

Eine besonders günstig Lösung sieht jedoch vor, dass der Hebel an einer Außenseite der Karosserie zugänglich angeordnet ist.

Besonders günstig ist es dabei, wenn der Hebel an einer Außenseite der Karosserie ständig zugänglich angeordnet ist.

Eine besonders günstige Anordnung des Hebels sieht vor, dass dieser im Bereich einer Stoßfängereinheit angeordnet ist, so dass sich der Hebel in ergonomisch günstiger Nähe zur Anhängekupplung anordnen lässt.

Die Betätigung des Hebels lässt sich besonders günstig dann realisieren, wenn der Hebel im Bereich einer Unterseite der Stoßfängereinheit angeordnet ist.

Prinzipiell kann der Hebel so bewegbar sein, dass die Bewegungsebene vertikal oder in beliebiger Neigung zu einer horizontalen oder einer vertikalen Ebene verlaufen.

Eine besonders günstige Lösung sieht jedoch vor, dass der Hebel in einer Bewegungsebene bewegbar ist, die mit einer horizontalen Ebene maximal einen Winkel von ungefähr 30° einschließt.

Noch besser ist es, wenn die Bewegungsebene mit einer horizontalen Ebene maximal einen Winkel von 20° noch besser maximale einen Winkel von 10° einschließt.

Bei einem derartigen Verlauf der Bewegungsebene ist der Hebel ergonomisch für eine Bedienungsperson günstig bewegbar, insbesondere dann, wenn der Hebel im Bereich einer Stoßfängereinheit angeordnet ist, da es bei einer Betätigung des Hebels in diesem Bereich für eine Bedienungsperson zur Kraftentfaltung besonders günstig ist, wenn sie den Hebel in einer nur gering von der horizontalen Ebene abweichenden Ebene bewegen muss.

Eine besonders vorteilhafte Lösung sieht dabei vor, dass die Bewegungsebene im Bereich einer Stoßfängereinheit angeordnet ist.

Besonders günstig ist es, wenn die Bewegungsebene in einem unteren, einer Fahrbahn zugewandten Bereich der Stoßfängereinheit angeordnet ist.

Um den Hebel möglichst optisch wenig auffällig zu gestalten, ist zweckmäßigerweise vorgesehen, dass der Hebel eine Querschnittsform aufweist, welche in der Bewegungsebene eine größere Ausdehnung aufweist als senkrecht zu dieser.

Vorzugsweise ist dabei der Hebel im Querschnitt oval oder aus Flachmaterial ausgebildet. Dies hat insbesondere bei einem erfindungsgemäßen Verlauf der Bewegungsebene den Vorteil, dass bei einer Blickrichtung parallel zur Bewegungsebene die Dimensionen des Hebels optisch wenig auffällig sind.

Hinsichtlich der Befestigung der Hebelbasis relativ zur Karosserie wurden bislang keine näheren Angaben gemacht. So wäre es beispielsweise denkbar, die Hebelbasis unmittelbar an einer Oberfläche eines Karosserieteils anzuordnen und zu fixieren.

Um jedoch die Hebelbasis möglichst stabil relativ zur Karosserie lagern zu können, ist vorzugsweise vorgesehen, dass die Hebelbasis an einem an der Karosserie verankerten, für eine Lastbeaufschlagung vorgesehenen Träger gehalten ist.

Der Träger könnte für eine beliebige Art der Lastbeaufschlagung vorgesehen sein. Eine besonders günstige Lösung sieht vor, dass der Träger einen die Anhängekupplung tragenden Querträger umfasst.

Ein derartiger Querträger bietet den Vorteil, dass dieser ohnehin für ein starke Belastung ausgelegt und entsprechend stabil an der Karosserie verankert ist, so dass gleichzeitig eine stabile Lagerung der Hebelbasis gegeben ist.

Insbesondere ist es dabei günstig, wenn die Hebelbasis unabhängig von einer Stoßfängereinheit angeordnet ist und somit durch die Stoßfängereinheit nicht gehalten oder stabilisiert ist.

Darüber hinaus betrifft die Erfindung ein Kraftfahrzeug umfassend eine Anhängekupplung mit einer fahrzeugfest angeordneten Lagereinheit, mit einem zwischen einer Arbeitsstellung und einer Ruhestellung gegenüber der Lagereinheit bewegbaren Kugelhals und mit einer manuellen Betätigungseinrichtung, mittels welcher über eine Bewegungsübertragungsvorrichtung die Anhängekupplung, insbesondere eine Verriegelungsvorrichtung einer derartigen Anhängekupplung, betätigbar ist.

Bei derartigen Kraftfahrzeugen besteht das Problem, dass die Montage der Betätigungsvorrichtung aufwändig ist, da diese üblicherweise in einem Kofferraum des Fahrzeugs erfolgt.

Der Erfindung liegt daher die Aufgabe zugrunde, ein Kraftfahrzeug mit einer Anhängekupplung möglichst montagefreundlich auszubilden.

Diese Aufgabe wird bei einem Kraftfahrzeug der vorstehend genannten Art erfindungsgemäß dadurch gelöst, dass die Betätigungseinrichtung in die Betätigungsübertragungsvorrichtung karosseriedurchbruchsfrei außerhalb der Karosserie angeordnet sind.

Der Vorteil dieser Lösung ist darin zu sehen, dass damit die Montage der Anhängekupplung mit Betätigungseinrichtung erheblich vereinfacht wird, da damit eine Vormontage einer Einheit aus Anhängekupplung, Betätigungseinrichtung und Betätigungsübertragungsvorrichtung möglich ist, und somit die gesamte Einheit ohne weitere Maßnahmen an das Fahrzeug montiert werden kann.

Dies ist auch ein erheblicher Vorteil bei einer Nachrüstung einer derartigen Anhängekupplung, da damit keinerlei zusätzliche Karosseriedurchbrüche aufwändig geschaffen und auch abgedichtet werden müssen.

Besonders zweckmäßig ist es, wenn die Betätigungseinrichtung und die Anhängekupplung an einem Querträger an der Fahrzeugkarosserie angeordnet sind, der zur Aufnahme der Anhängekupplung ohnehin vorgesehen ist.

Dieser Querträger kann außerhalb der Karosserie des Fahrzeugs in einfacher Weise montiert werden und somit auch mit diesem die Betätigungseinrichtung.

Zweckmäßigerweise ist dabei vorgesehen, dass der Querträger von einer Stoßfängereinheit abgedeckt ist.

Hinsichtlich der Anordnung der manuellen Betätigungseinrichtung relativ zur Lagereinheit wurden bislang keine näheren Angaben gemacht.

Um einen ergonomisch günstigen Zugang zur Betätigungseinrichtung zu schaffen, ist vorzugsweise vorgesehen, dass die Betätigungseinrichtung auf einer der Ruhestellung des Kugelhalses gegenüberliegenden Seite der Lagereinheit angeordnet ist.

Ferner wurden hinsichtlich der Anordnung der Betätigungseinrichtung im Zusammenhang mit der Lagereinheit keine näheren Angaben gemacht.

So wäre es beispielsweise denkbar, die Betätigungseinrichtung an der Lagereinheit anzuordnen.

Noch günstiger ist es jedoch, wenn die Betätigungseinrichtung neben der Lagereinheit der Anhängekupplung angeordnet ist.

Ein ergonomischer Zugang zur Betätigungseinrichtung ist besonders einfach dann realisierbar, wenn die Betätigungseinrichtung im Abstand von der Lagereinheit angeordnet ist.

Ferner wurden hinsichtlich der Ausbildung der manuellen Betätigungseinrichtung keine näheren Angaben gemacht. Eine zweckmäßige Lösung sieht vor, dass die Betätigungseinrichtung eine von dem Querträger gehaltene Hebelbasis und einen bewegbaren Hebel umfasst.

Besonders günstig ist es dabei ebenfalls, um die Betätigungseinrichtung unabhängig von der Karosserie und dem Stoßfänger montieren zu können, wenn die Hebelbasis unabhängig von der Stoßfängereinheit angeordnet ist.

Eine besonders günstige Lösung sieht vor, dass der Hebel im Bereich der Stoßfängereinheit zugänglich angeordnet ist.

Die Zugänglichkeit des Hebels lässt sich besonders zweckmäßig dann realisieren, wenn der Hebel im Bereich einer Unterseite der Stoßfängereinheit angeordnet ist.

Der Hebel könnte grundsätzlich in verschiedenen Richtungen bewegbar sein. Eine hinsichtlich einer optisch günstigen Anordnung des Hebels und einer einfachen Betätigung optimale Lösung sieht vor, wenn der Hebel in einer Bewegungsebene bewegbar ist, die mit einer horizontalen Ebene maximal einen Winkel von ungefähr 30°, noch besser maximal 20° und noch günstiger maximal 10° einschließt.

Noch vorteilhafter ist es, wenn die Bewegungsebene ungefähr horizontal verläuft.

Eine weitere günstige Lösung sieht vor, dass die Bewegungsebene im Bereich einer Seite der Stoßfängereinheit angeordnet ist.

Diese Seite ist beispielsweise die Unterseite der Stoßfängereinheit, so dass die Bewegungsebene ungefähr ähnlich ausgerichtet wie eine Unterseite der Stoßfängereinheit verläuft.

Hinsichtlich der optischen Erscheinungsform des Hebels sind bislang ebenfalls keine näheren Angaben gemacht. Beispielsweise wäre es denkbar, den Hebel als runden Hebel auszuführen. Besonders günstig ist es jedoch, wenn der Hebel eine Querschnittsform aufweist, welche in seiner Bewegungsebene eine größere Ausdehnung aufweist als senkrecht zu dieser.

Um eine möglichst geringe optische Beeinträchtigung des Aussehens des Kraftfahrzeugs zu erhalten, ist vorzugsweise vorgesehen, dass die Stoßfängereinheit mit einem Ausschnitt für die Betätigungseinrichtung versehen ist, so dass nicht die gesamte Stoßfängereinheit auf die Anordnung der Betätigungseinrichtung abgestimmt werden muss.

Besonders vorteilhaft ist es, wenn die Stoßfängereinheit mit einem Ausschnitt für den Kugelhals und dem von diesem getrennten Ausschnitt für die Betätigungseinrichtung versehen ist, so dass eine möglichst geringe Beeinträchtigung der gesamten, das optische Aussehen des Fahrzeugs definierenden Elemente der Karosserie gegeben ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf eine Heckpartie einer Karosserie eines Kraftfahrzeugs mit einer Stoßfängereinrichtung und einer Anhängekupplung mitsamt einer erfindungsgemäßen Betätigungseinrichtung;
- Fig. 2: einen Schnitt längs Linie 2-2 in Fig. 1;
- Fig. 3: eine Draufsicht in Richtung des Pfeils A in Fig. 1;
- Fig. 4: eine Darstellung einer Befestigung von Anhängekupplung und Betätigungseinrichtung an einem von der Stoßfängereinheit abgedeckten Querträger;
- Fig. 5: eine Draufsicht ähnlich Fig. 3 bei entfernter Stoßfängereinheit;
- Fig. 6: einen Schnitt längs Linie 6-6 in Fig. 5;
- Fig. 7: eine Draufsicht ähnlich Fig. 5 auf das erste Ausführungsbeispiel der erfindungsgemäßen Betätigungseinrichtung in Betätigungs-stellung;
- Fig. 8: eine Draufsicht ähnlich Fig. 5 auf das erste Ausführungsbeispiel der erfindungsgemäßen Betätigungseinrichtung in Ausgangs-stellung aber bei gelöster Sicherungseinrichtung;

- Fig. 9: einen Schnitt entsprechend Fig. 6 durch ein zweites Ausführungsbeispiel einer erfindungsgemäßen Betätigungseinrichtung und
- Fig. 10: einen Schnitt ähnlich Fig. 6 durch ein drittes Ausführungsbeispiel einer erfindungsgemäßen Betätigungseinrichtung.

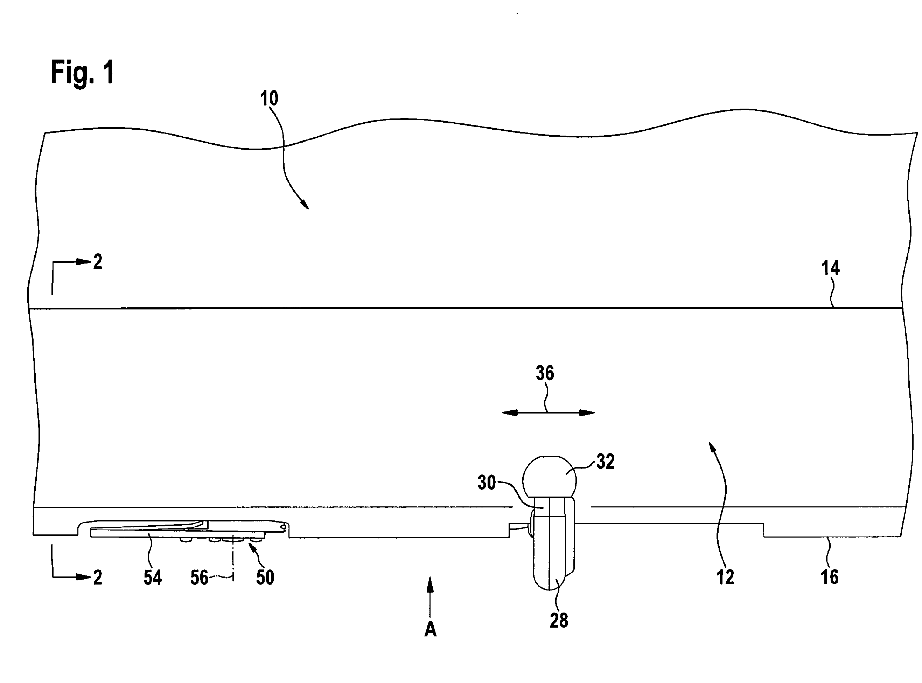

Eine in Fig. 1 dargestellte, als Ganzes mit 10 bezeichnete Heckpartie eines Kraftfahrzeugs ist mit einer Stoßfängereinheit 12 versehen, welche einen unteren Abschluss der Heckpartie 10 darstellt, wobei die Stoßfängereinheit 12 eine sich von der Heckpartie 10 weg erstreckende Oberseite 14, eine von der Oberseite 14 ausgehend abfallende Rückseite 16 und eine sich wieder von der Rückseite 16 in Richtung der Heckpartie 10 erstreckende Unterseite 18 aufweist.

Ferner deckt die Stoßfängereinheit 12 einen Querträger 20 ab, welcher sich quer zu einer Längsrichtung 22 des Kraftfahrzeugs zu seitlich an der Karosserie vorgesehenen Aufnahmen erstreckt.

An dem Querträger 20, und insbesondere unterhalb desselben ist eine als Ganzes mit 24 bezeichnete Lagereinheit einer Anhängekupplung 26 gehalten, wobei die Lagereinheit 24 eine schwenkbare Lagerung für einen Kugelhals 28 bildet, der an seinem der Lagereinheit abgewandten abgekröpften Ende 30 eine Kupplungskugel 32 trägt.

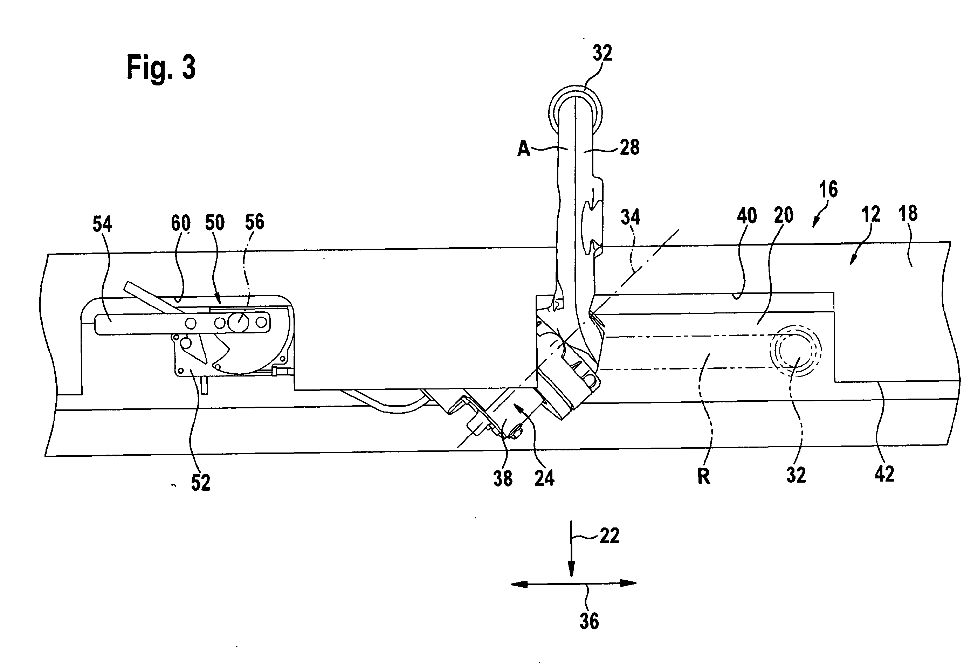

Wie in Fig. 3 dargestellt, ist die Lagereinheit 24 so ausgebildet, dass der Kugelhals 28 um eine Schwenkachse 34 verschwenkbar ist, welche schräg zur Fahrzeuglängsrichtung 22 und außerdem schräg zu einer horizontalen Richtung 36 verläuft.

Die Lagereinheit 24 umfasst außerdem noch eine Verriegelungsvorrichtung 38, welche den Kugelhals 28 in seiner Arbeitsstellung A und seiner Ruhestellung R verriegelt.

Um dem Kugelhals 28 die Möglichkeit zu eröffnen, sich durch Schwenken, um die Schwenkachse 34 von seiner in Fig. 3 durchgezogen gezeichneten Arbeitsstellung A in seine in Fig. 3 gestrichelt dargestellte Ruhestellung R zu bewegen, in welcher der Kugelhals 28 mit nach unten, das heißt der Unterseite 18 zugewandter Kupplungskugel 32 unterhalb des Querträgers 20 und ungefähr in gleicher Richtung wie dieser verlaufend und abgedeckt durch die Stoßfängereinheit 12 angeordnet ist, ist die Unterseite 18 der Stoßfängereinheit 12 mit einem als Ganzes mit 40 bezeichneten Ausschnitt versehen, welcher sich in der Unterseite 18 von einer der Heckpartie 10 zugewandten Endkante 42 in Richtung der Rückseite 16 erstreckt, jedoch im Abstand von der Rückseite 16 endet und so bemessen ist, dass der gesamte sich von der Lagereinheit 24 ausgehend erstreckende Kugelhals 28 mit der Kupplungskugel 32 durch den Ausschnitt 40 in der Unterseite 18 hindurch bewegbar ist. Zum Betätigen der Verriegelungsvorrichtung 38 ist auf einer der Ruhestellung R des Kugelhalses 28 gegenüberliegenden Seite der Lagereinheit 24 eine ebenfalls zumindest teilweise von der Stoßfängereinheit 12 verdeckte Betätigungseinrichtung 50 außerhalb der Karosserie, das heißt in diesem Fall der Heckpartie 10, vorgesehen, welche eine Vorrichtungsbasis 52 aufweist, an welcher ein Hebel 54 um eine Achse 56 schwenkbar gelagert ist.

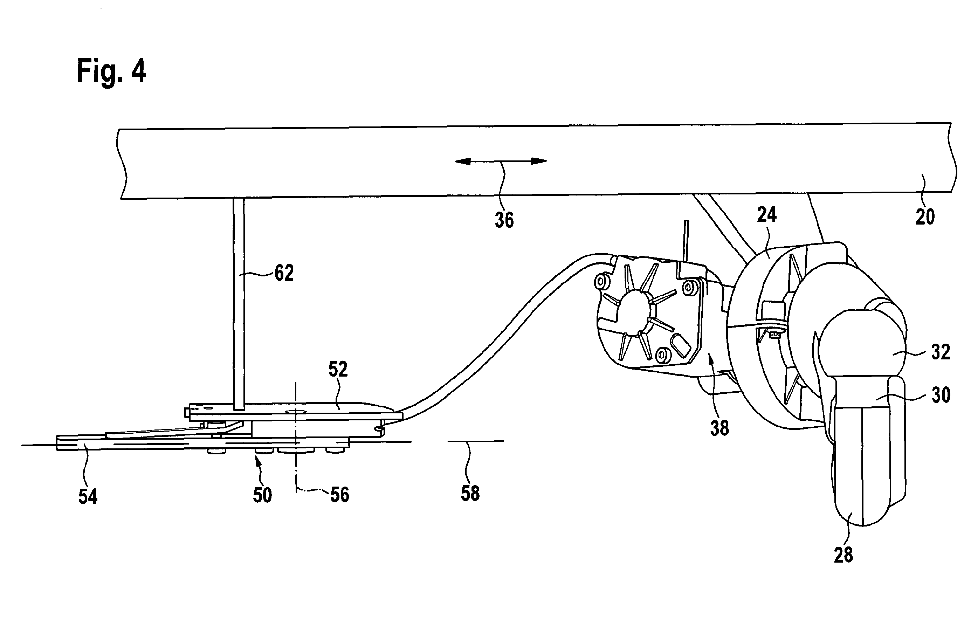

Die Achse 56 steht dabei, wie in Fig. 4 dargestellt, im Wesentlichen senkrecht, so dass der Hebel 54 in einer Ebene 58 bewegbar ist, welche ungefähr parallel zur Horizontalen 36 verläuft, jedoch mit zunehmendem Abstand von der Heckpartie 10 geringfügig nach unten, das heißt in Richtung einer Fahrbahn abfällt.

Somit ist die Betätigungseinrichtung 50, wie in Fig. 1 dargestellt, zumindest teilweise von der Stoßfängereinheit 12 abgedeckt, wobei um den Hebel 54 zugänglich zu machen, die Unterseite 18 ebenfalls mit einem Ausschnitt 60 versehen ist, welcher von der Endkante 42 der Unterseite 18 in Richtung der Rückseite 16 der Stoßfängereinheit 12 verläuft, jedoch im Abstand von dieser endet, wobei über den Ausschnitt 60, wie insbesondere in Fig. 1 dargestellt, im Wesentlichen der Hebel 54 zugänglich ist, während die Vorrichtungsbasis 52 weitgehend von der Stoßfängereinheit 12 verdeckt ist.

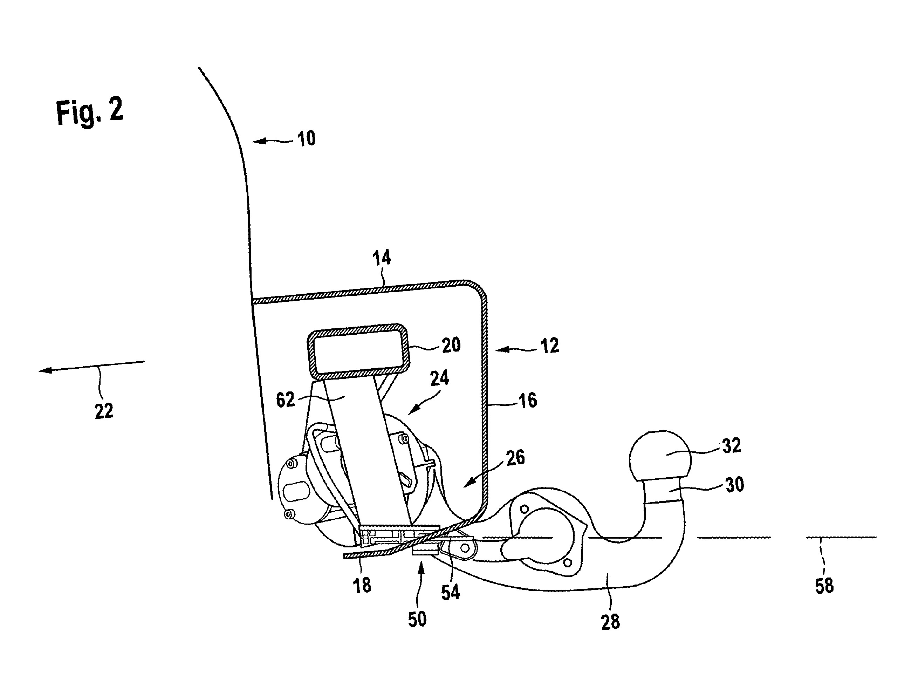

Zur selbstständigen Fixierung ist die Vorrichtungsbasis 52 im Abstand von der Lagereinheit 24, wie in Fig. 2 und 4 dargestellt, über einen Träger 62 mit dem Querträger 20 verbunden, so dass die Vorrichtungsbasis 52 völlig unabhängig von der Stoßfängereinheit 12 relativ zur Heckpartie 10 der Karosserie positioniert und gehalten ist.

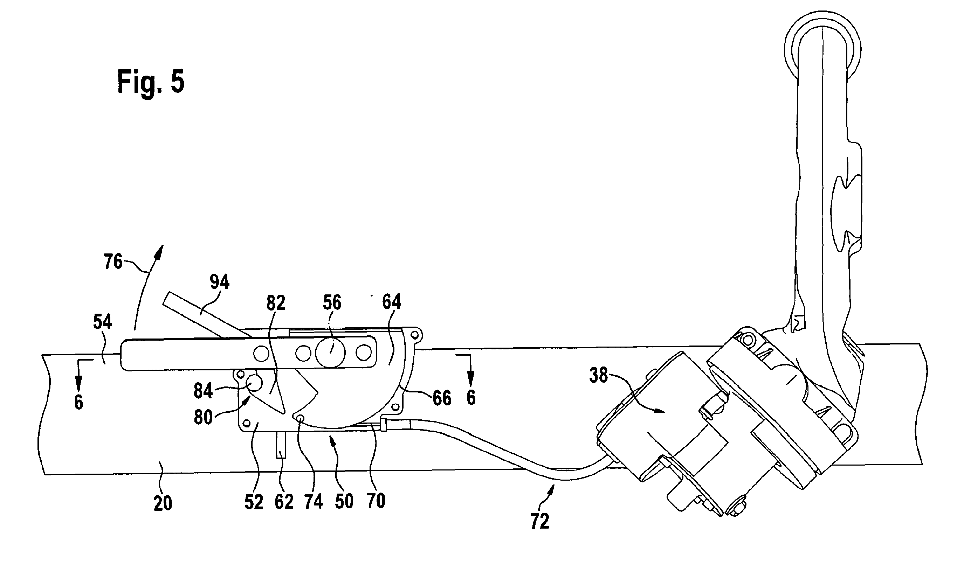

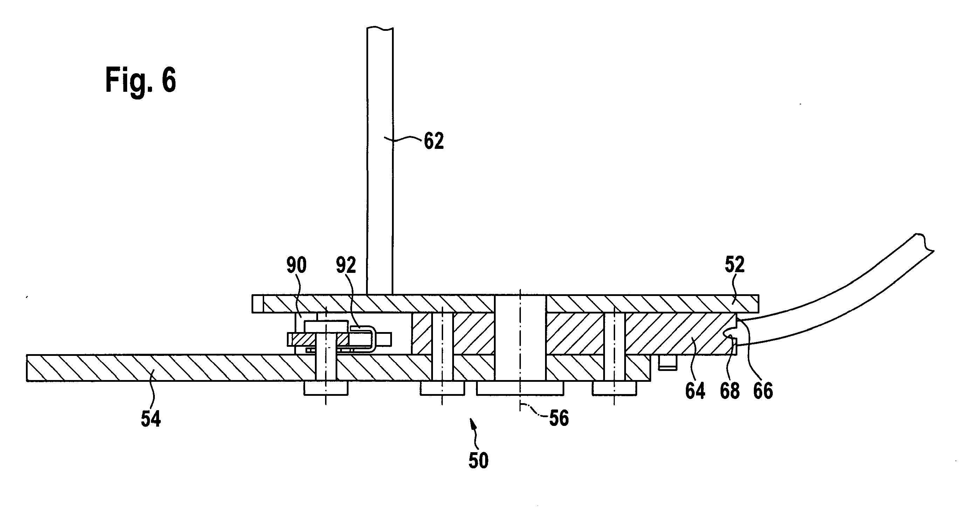

Wie in Fig. 5 und 6 dargestellt, ist der Hebel 54 mit einem Führungskörper 64 verbunden, welcher eine als Kreissegment ausgebildete Außenkontur 66 aufweist, in welcher, wie in Fig. 6 dargestellt, eine als Vertiefung ausgebildete Rille verläuft, die dazu dient, ein Zugseil 70 eines als Ganzes mit 72 bezeichneten Seilzugs aufzunehmen, der als Bewegungsübertragungsvorrichtung zwischen der Betätigungseinrichtung 50 und der Verriegelungsvorrichtung 38 wirksam ist, wobei auch die Betätigungsübertragungsvorrichtung 72 außerhalb der Karosserie 10 und abgedeckt durch die Stoßfängereinheit 12 verläuft.

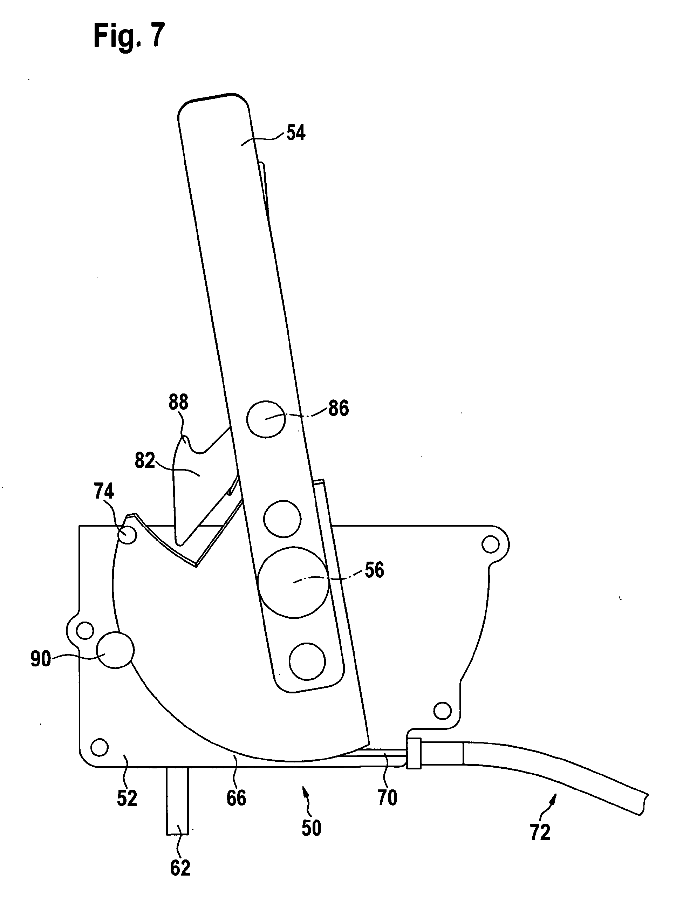

Das Zugseil 70 ist dabei durch ein Halteelement 74 mit dem Führungskörper 64 verbunden, so dass durch ein Ziehen des Hebels 54 weg von der Stoßfängereinrichtung 12 dieser in einer Betätigungsrichtung 76 verschwenkt und somit, wie in Fig. 7 dargestellt, an dem Zugseil 70 derart zieht, dass sich dieses im Wesentlichen längs der Außenkontur 66 in die Rille 68 hineinlegt.

Um zu verhindern, dass der Hebel 54 unbeabsichtigt in Richtung der Betätigungsrichtung 76 verschwenkt wird, ist die Betätigungseinrichtung 50 noch mit einer als Ganzes mit 80 bezeichneten Sicherungseinrichtung versehen, welche einerseits ein Sicherungselement 82 sowie eine Sicherungselementaufnahme 84 aufweist.

Das Sicherungselement 82 ist bei dem ersten Ausführungsbeispiel als um eine Achse 86 schwenkbare Rastklinke mit einer Rastnase 88 ausgebildet, die zum Sichern des Hebels 54 in der Ausgangsstellung eine als Zapfen 90 ausgebildete Sicherungselementaufnahme 84 hintergreift. Hierzu ist das Sicherungselement 82 mit einer Feder 92 so beaufschlagt, dass die Rastnase 88 stets die Tendenz hat, in die den Zapfen 90 hintergreifende Stellung überzugehen.

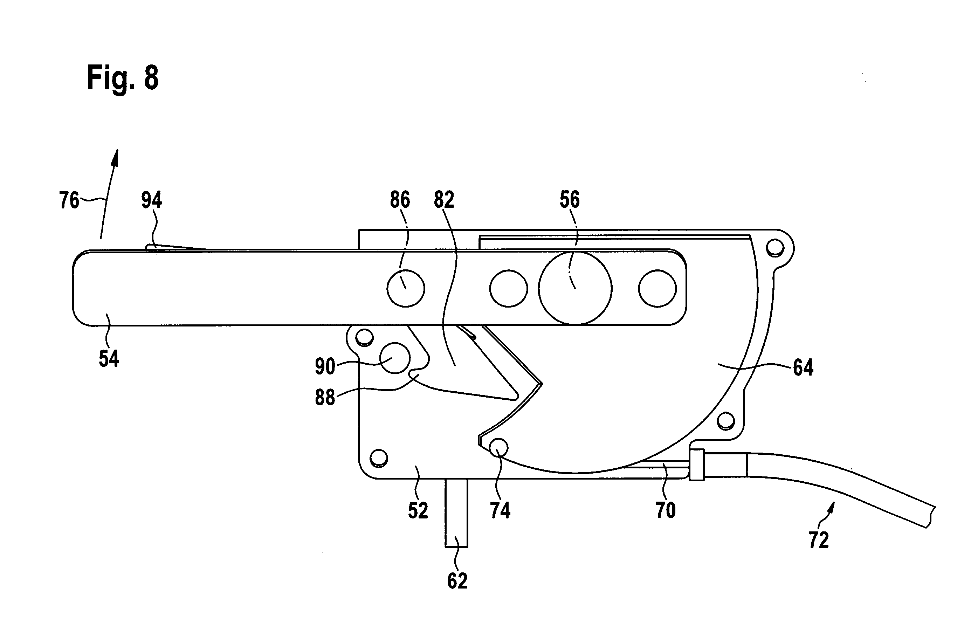

Zum Lösen des als Rastklinke ausgebildeten Sicherungselements 82 ist dieses mit einem Lösehebel 94 verbunden, welcher in der Raststellung des Sicherungselements 82 in einem spitzen Winkel zum Hebel 54 verläuft und zum Lösen des Sicherungselements 82 in Richtung des Hebels 54 bewegbar ist, wobei in diesem Fall, wie in Fig. 8 dargestellt, das als Rastklinke ausgebildete Sicherungselement 82 so weit um die Achse 86 verschwenkt, dass die Rastnase 88 an dem Zapfen 90 vorbei bewegbar ist, und folglich der Hebel 54 in der Betätigungsrichtung 76 von der in Fig. 5 dargestellten Ausgangsstellung in die in Fig. 7 dargestellte Betätigungsstellung verschwenkbar ist. Dieses Verschwenken des Hebels 54 bewirkt ein Ziehen an dem Zugseil 70 und somit eine Einwirkung auf die Verriegelungsvorrichtung 38 dergestalt, dass die Verriegelung der Schwenkbewegung des Kugelhalses 28 um die Schwenkachse 34 gelöst wird und somit der Kugelhals 28 zwischen der Ruhestellung R und der Arbeitsstellung A hin und her verschwenkbar ist.

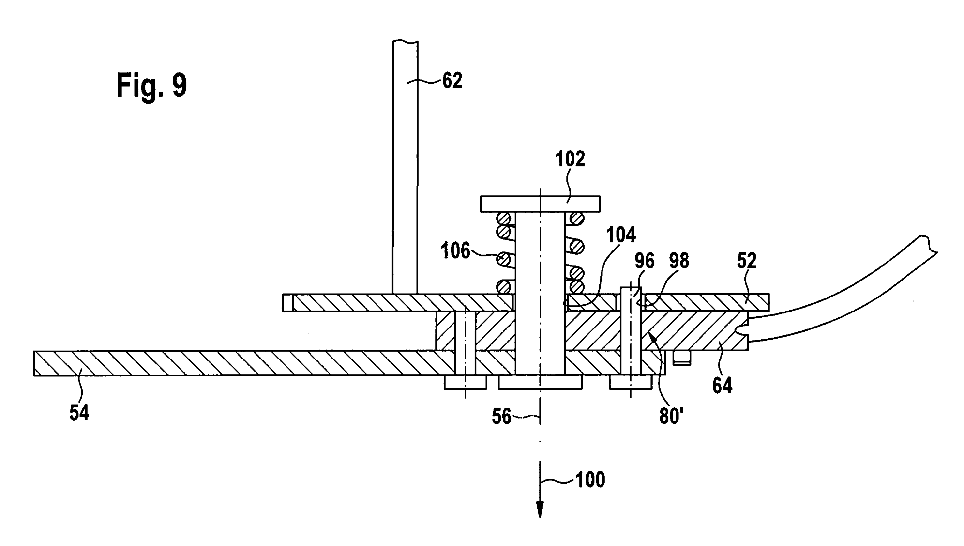

Bei einem zweiten Ausführungsbeispiel, dargestellt in Fig. 9, ist die Sicherungseinrichtung 80' derart ausgebildet, dass zur Sicherung des Hebels 54 in der Ausgangsstellung ein Rastzapfen 96 mit einer Rastausnehmung 98 in der Vorrichtungsbasis 52 in Eingriff steht.

Die Sicherungseinrichtung 80' ist nun dadurch lösbar, dass der Hebel 54 mitsamt dem Führungskörper 64 in einer Löserichtung 100 soweit verschiebbar ist, bis der Rastzapfen 96 außer Eingriff mit der Rastausnehmung 98 steht und der Hebel 54 mit dem Führungskörper 64 um die Achse 56 drehbar ist.

Hierzu ist der Hebel 54 mit dem Führungskörper 64 an einem als Ganzes mit 102 bezeichneten Lagerbolzen gehalten, der seinerseits drehbar in einem Lagerdurchbruch 104 in der Vorrichtungsbasis 52 gelagert ist und andererseits durch eine Feder 106 derart beaufschlagt ist, dass der Hebel 54 mit dem Führungskörper 64 sich stets in Richtung der Vorrichtungsbasis 52 beaufschlagt ist, so dass bei nicht erfolgender Einwirkung auf den Hebel 54 der Rastzapfen 96 in die Rastausnehmung 98 eingreift und nur dann, wenn der Hebel 54 in Löserichtung 100 beaufschlagt ist, der Rastzapfen 96 außer Eingriff mit der Rastausnehmung 98 kommt.

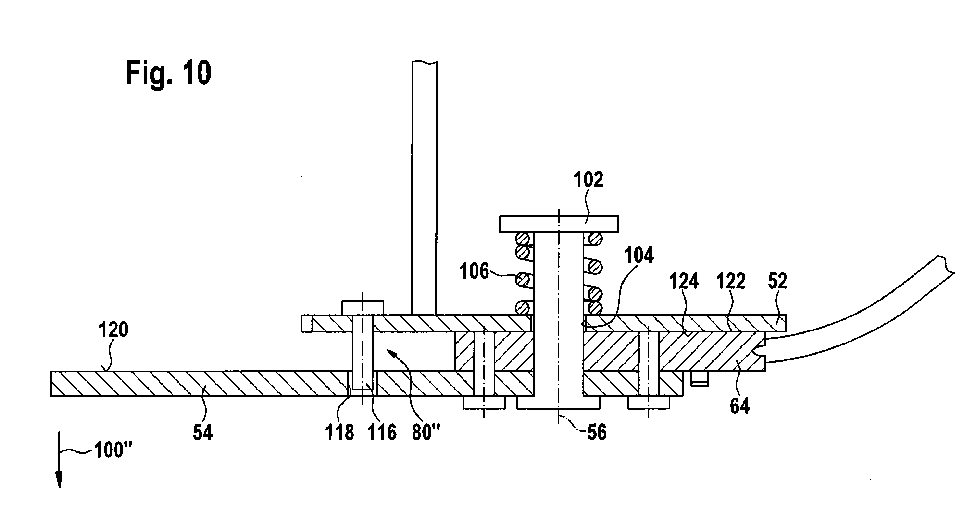

Bei einem dritten Ausführungsbeispiel, dargestellt in Fig. 10 ist die Vorrichtungsbasis 52 selbst mit einem Rastzapfen 116 versehen, welcher mit einer Rastausnehmung 118 im Hebel 54 selbst in Eingriff bringbar ist, wobei die Rastausnehmung 118 in einem zwischen einer Angriffsfläche 120 des Hebels 54 und der Achse 56 liegenden Bereich angeordnet ist.

Durch Verkippen des Hebels 54 dadurch, dass dieser im Bereich der Handangriffsfläche 120 beaufschlagt wird, lässt sich nun der Hebel so weit bewegen, dass die Rastausnehmung 118 mit dem Rastzapfen 96 außer Eingriff kommt.

Hierzu ist der Lagerbolzen 102 mit Spiel in dem Lagerdurchbruch 104 gelagert und ebenfalls durch die Feder 106 so beaufschlagt, dass dieser die Tendenz hat, den Führungskörper 64 mit seiner Auflageseite 122 an einer Anlageseite 124 der Vorrichtungsbasis 52 anzulegen, während bei Beaufschlagung der Handangriffsfläche 120 in der Löserichtung 102' der Führungskörper 64 zumindest mit Teilen seiner Auflageseite 122 von der Anlageseite 124 abhebbar ist, um die Rastausnehmung 118 zumindest teilweise außer Eingriff mit dem Rastzapfen 116 zu bringen.

## Patentansprüche

1. Betätigungseinrichtung für eine Anhängekupplung (26), insbesondere zum Betätigen einer Anhängekupplung (26) mit einem zwischen einer Arbeitsstellung (A) und einer Ruhestellung (R) bewegbaren Kugelhals (28), beispielsweise einer Verriegelungsvorrichtung (38) einer derartigen Anhängekupplung (26), umfassend
eine Vorrichtungsbasis (52), welche fahrzeugseitig montierbar ist und einen an der Vorrichtungsbasis (52) bewegbar gelagerten Hebel (54), der von einer Ausgangsstellung, in welcher keine Betätigung der Anhängekupplung (26) erfolgt, in eine Betätigungsstellung bewegbar ist, wodurch mittels einer Bewegungsübertragungsvorrichtung (72) eine Einwirkung auf die Anhängekupplung (26) erfolgt,
**dadurch gekennzeichnet, dass** an dem Hebel (54) eine Sicherungseinrichtung (80) vorgesehen ist, welche in der Ausgangsstellung den Hebel (54) gegen eine Betätigung sichert.

2. Betätigungseinrichtung nach Anspruch 1, **dadurch gekennzeichnet, dass** die Sicherungseinrichtung (80) ein Sicherungselement (82, 96, 116) umfasst, welches mit einer Sicherungselementaufnahme (84, 98, 118) an der Vorrichtungsbasis (52) in Wirkverbindung bringbar ist, um den Hebel (54) in der Ausgangsstellung an der Vorrichtungsbasis (52) festzulegen.

3. Betätigungseinrichtung nach Anspruch 2, **dadurch gekennzeichnet, dass** das Sicherungselement (82, 96, 116) durch einen elastischen Kraftspeicher (92, 106) in Richtung seiner mit der Sicherungselementaufnahme (84, 98, 118) zusammenwirkenden Stellung beaufschlagt ist.

4. Betätigungseinrichtung nach einem der voranstehenden Ansprüche,
**dadurch gekennzeichnet, dass** das Sicherungselement (82, 96, 116) im Zusammenhang mit einem Einwirken auf den Hebel (54) außer Wirkverbindung mit des Sicherungselementaufnahme (84, 98, 118) bringbar ist.

5. Betätigungseinrichtung nach Anspruch 4, **dadurch gekennzeichnet, dass** die Sicherungseinrichtung (80) ein betätigbares Löseelement (94) umfasst, mit welchem das Sicherungselement (82) in eine außer Wirkverbindung mit der Sicherungselementaufnahme (84) stehende Stellung bringbar ist.

6. Betätigungseinrichtung nach Anspruch 5, **dadurch gekennzeichnet, dass** das Löseelement (94) gegenüber dem Hebel (54) bewegbar ist.

7. Betätigungseinrichtung nach Anspruch 5 oder 6, **dadurch gekennzeichnet, dass** das Löseelement (94) an dem Hebel (54) bewegbar gelagert ist.

8. Betätigungseinrichtung nach einem der Ansprüche 5 bis 7, **dadurch gekennzeichnet, dass** das Löseelement ein Lösehebel (94) ist.

9. Betätigungseinrichtung nach Anspruch 8, **dadurch gekennzeichnet, dass** der Lösehebel (94) zum Betätigen in Richtung des Hebels (54) schwenkbar ist.

10. Betätigungseinrichtung nach einem der Ansprüche 1 bis 4, **dadurch gekennzeichnet, dass** das Sicherungselement (96, 116) durch Einwirken auf den Hebel (54) in einer quer zur von der Ausgangsstellung in die Betätigungsstellung führenden Bewegungsrichtung (76) verlaufenden Löserichtung (100) außer Wirkverbindung mit der Sicherungselementaufnahme (98, 118) bringbar ist.

11. Betätigungseinrichtung nach dem Oberbegriff des Anspruchs 1 oder nach einem der voranstehenden Ansprüche, **dadurch gekennzeichnet, dass** der Hebel (54) an einer Außenseite der Karosserie (10) zugänglich angeordnet ist.

12. Betätigungseinrichtung nach Anspruch 11, **dadurch gekennzeichnet, dass** der Hebel (54) von einer Außenseite der Karosserie (10) ständig zugänglich angeordnet ist.

13. Betätigungseinrichtung nach Anspruch 11 oder 12, **dadurch gekennzeichnet, dass** der Hebel (54) im Bereich einer Stoßfängereinheit (12) angeordnet ist.

14. Betätigungseinrichtung nach Anspruch 13, **dadurch gekennzeichnet, dass** der Hebel (54) im Bereich einer Unterseite (18) der Stoßfängereinheit angeordnet ist.

15. Betätigungseinrichtung nach dem Oberbegriff des Anspruchs 1 oder nach einem der voranstehenden Ansprüche, **dadurch gekennzeichnet, dass** der Hebel (54) in einer Bewegungsebene (58) bewegbar ist, die mit einer horizontalen Ebene maximal einen Winkel von ungefähr 30° einschließt.

16. Betätigungseinrichtung nach Anspruch 15, **dadurch gekennzeichnet, dass** die Bewegungsebene (58) ungefähr horizontal verläuft.

17. Betätigungseinrichtung nach Anspruch 15 oder 16 , **dadurch gekennzeichnet, dass** die Bewegungsebene (58) im Bereich einer Stoßfängereinheit (12) angeordnet ist.

18. Betätigungseinrichtung nach Anspruch 17, **dadurch gekennzeichnet, dass** die Bewegungsebene (58) in einem unteren, einer Fahrbahn zugewandtem Bereich der Stoßfängereinheit (12) angeordnet ist.

19. Betätigungseinrichtung nach einem der Ansprüche 15 bis 18, **dadurch gekennzeichnet, dass** der Hebel (54) eine Querschnittsform aufweist, welche in der Bewegungsebene (58) eine größere Ausdehnung aufweist als senkrecht zu dieser.

20. Betätigungseinrichtung nach dem Oberbegriff des Anspruchs 1 oder nach einem der voranstehenden Ansprüche, **dadurch gekennzeichnet, dass** die Hebelbasis (52) an einem an der Karosserie (10) verankerten, für eine Lastbeaufschlagung vorgesehenen Träger (20, 62) gehalten ist.

21. Betätigungseinrichtung nach Anspruch 20, **dadurch gekennzeichnet, dass** der Träger einen die Anhängekupplung (26) tragenden Querträger (20) umfasst.

22. Betätigungseinrichtung nach einem der voranstehenden Ansprüche,
**dadurch gekennzeichnet, dass** die Hebelbasis (52) unabhängig von einer Stoßfängereinheit (12) angeordnet ist.

23. Kraftfahrzeug umfassend eine Anhängekupplung (26) mit einer fahrzeugfest angeordneten Lagereinheit (24), mit einem zwischen einer Arbeitsstellung (A) und einer Ruhestellung (R) gegenüber der Lagereinheit (24) bewegbaren Kugelhals (28) und mit einer manuellen Betätigungseinrichtung (50), mittels welcher über eine Bewegungsübertragungsvorrichtung (72) die Anhängekupplung (26), insbesondere eine Verriegelungsvorrichtung (38) einer derartigen Anhängekupplung (26), betätigbar ist, **dadurch gekennzeichnet, dass** die Betätigungseinrichtung (50) und die Betätigungsübertragungsvorrichtung (72) karosseriedurchbruchsfrei außerhalb der Karosserie (10) angeordnet sind.

24. Kraftfahrzeug nach Anspruch 23, **dadurch gekennzeichnet, dass** die Betätigungseinrichtung (50) und die Anhängekupplung (26) an einem Querträger (20) angeordnet sind.

25. Kraftfahrzeug nach einem der Ansprüche 24, **dadurch gekennzeichnet, dass** der Querträger (20) von einer Stoßfängereinheit (12) abgedeckt ist.

26. Kraftfahrzeug nach einem der Ansprüche 23 bis 25, **dadurch gekennzeichnet, dass** die Betätigungseinrichtung (50) auf einer der Ruhestellung (R) des Kugelhalses (28) gegenüberliegenden Seite der Lagereinheit (24) angeordnet ist.

27. Kraftfahrzeug nach einem der Ansprüche 23 bis 26, **dadurch gekennzeichnet, dass** die Betätigungseinrichtung (50) neben der Lagereinheit (24) der Anhängekupplung (26) angeordnet ist.

28. Kraftfahrzeug nach Anspruch 26, **dadurch gekennzeichnet, dass** die Betätigungseinrichtung (50) im Abstand von der Lagereinheit (24) angeordnet ist.

29. Kraftfahrzeug nach einem der Ansprüche 23 bis 28, **dadurch gekennzeichnet, dass** die Betätigungseinrichtung (50) eine von dem Querträger (20) gehaltene Hebelbasis (52) und einen bewegbaren Hebel (54) umfasst.

30. Kraftfahrzeug nach Anspruch 29, **dadurch gekennzeichnet, dass** die Hebelbasis (52) unabhängig von einer Stoßfängereinheit (12) angeordnet ist.

31. Kraftfahrzeug nach Anspruch 29 oder 30, **dadurch gekennzeichnet, dass** der Hebel (54) im Bereich der Stoßfängereinheit (12) zugänglich angeordnet ist.

32. Kraftfahrzeug nach Anspruch 31, **dadurch gekennzeichnet, dass** der Hebel (54) im Bereich einer Unterseite (18) der Stoßfängereinheit angeordnet ist.

33. Kraftfahrzeug nach einem der Ansprüche 29 bis 32, **dadurch gekennzeichnet, dass** der Hebel (54) in einer Bewegungsebene (58) bewegbar ist, die mit einer horizontalen Ebene maximal einen Winkel von ungefähr 30° einschließt.

34. Kraftfahrzeug nach Anspruch 33, **dadurch gekennzeichnet, dass** die Bewegungsebene (58) ungefähr horizontal verläuft.

35. Kraftfahrzeug nach Anspruch 33 oder 34, **dadurch gekennzeichnet, dass** die Bewegungsebene (58) im Bereich einer Seite (18) der Stoßfängereinheit (12) angeordnet ist.

36. Kraftfahrzeug nach einem der Ansprüche 33 bis 35, **dadurch gekennzeichnet, dass** die Bewegungsebene (58) in einem unteren, einer Fahrbahn zugewandtem Bereich der Stoßfängereinheit (12) angeordnet ist.

37. Kraftfahrzeug nach einem der Ansprüche 29 bis 36, **dadurch gekennzeichnet, dass** der Hebel (54) eine Querschnittsform aufweist, welche in seiner Bewegungsebene (58) eine größere Ausdehnung aufweist als senkrecht zu dieser.

38. Kraftfahrzeug nach einem der Ansprüche 25 bis 37, **dadurch gekennzeichnet, dass** die Stoßfängereinheit (12) mit einem Ausschnitt (60) für die Betätigungseinrichtung (50) versehen ist.

39. Kraftfahrzeug nach Anspruch 38, **dadurch gekennzeichnet, dass** die Stoßfängereinheit (12) mit einem Ausschnitt (40) für den Kugelhals (28) und dem von diesem getrennten Ausschnitt (60) für die Betätigungseinrichtung (50) versehen ist.

40. Kraftfahrzeug nach einem der Ansprüche 29 bis 39, **dadurch gekennzeichnet, dass** die Betätigungseinrichtung nach einem der Ansprüche 1 bis 12 ausgebildet ist.
